# EUROPÄISCHE PATENTSCHRIFT

(11) **EP 1 519 849 B1**
(45) Veröffentlichungstag und Bekanntmachung des Hinweises auf die Patenterteilung: **28.02.2007**
(21) Anmeldenummer: 03761430.2
(22) Anmeldetag: 25.06.2003
(51) Int. Cl.: B60H 1/32, F16K 17/16

(54) **KLIMAANLAGE MIT BERSTSCHEIBENEINRICHTUNG**
AIR CONDITIONING INSTALLATION COMPRISING A RUPTURE DISK DEVICE
INSTALLATION DE CLIMATISATION DOTEE D'UN EQUIPEMENT A PLAQUE DE RUPTURE

(30) Priorität: 27.06.2002 DE 10228711
(43) Veröffentlichungstag der Anmeldung: 06.04.2005
(73) Patentinhaber: LuK Fahrzeug-Hydraulik GmbH & Co. KG, 61352 Bad Homburg v.d.H. (DE); Behr GmbH & Co. KG, 70469 Stuttgart (DE)
(72) Erfinder: PARSCH, Willi, 64342 Seeheim (DE); KAMPF, Hans, 71404 Korb (DE); HEINLE, Dieter, 73655 Plüderhausen (DE)
(74) Vertreter: Duschl, Edgar Johannes
(86) Internationale Anmeldenummer: PCT/DE2003/002115
(87) Internationale Veröffentlichungsnummer: WO 2004/002764

(56) Entgegenhaltungen:
- EP-A- 1 040 947
- DE-A- 1 950 221
- US-A- 4 830 052

## Beschreibung

Die Erfindung betrifft eine Klimaanlage, insbesondere für Kraftfahrzeuge, mit einem Klimakompressor, mit einem Gaskühler und mit einem Receiver sowie anderen bekannten Elementen, welche zum Kreislauf einer Klimaanlage gehören. Ferner weist die Klimaanlage eine Berstscheibeneinrichtung auf, welche bei Überschreiten eines bestimmten Drucks durch Bersten das Kältemittel an die Umgebung abgibt und dadurch das weitere Ansteigen des Druckes über eine kritische Grenze hinaus verhindert.

Klimaanlagen, die mit gesundheitsschädlichen Kältemitteln arbeiten, wie z. B. CO₂, bergen die Gefahr, im Falle einer Leckage unzulässig hohe Konzentrationen von Kältemittel im Fahrzeuginnenraum zu erzeugen. Besonders kritisch ist dieses, wenn die Gesamtmenge des Kältemittels der Anlage so groß ist, daß bei einer Entleerung der Anlage in den Innenraum die kritische Konzentration überschritten wird. Eine Limitierung der Kältemittelmenge in der Anlage ist aber technisch nicht sinnvoll, da die Funktion dadurch beeinträchtigt wird.

Die Druckschrift EP 1 040 947 A2 beschreibt eine Klimaanlage nach dem Oberbegriff des Anspruchs 1 mit einer Schnellablassvorrichtung zur Verringerung der Gefahr einer Gefährdung der Insassen eines Fahrzeuges. Dabei werden relativ aufwendige Schnellablassventilvorrichtungen vorgeschlagen, die beispielsweise elektromagnetisch betätigt werden.

Es ist Aufgabe der Erfindung, eine Klimaanlage darzustellen, die diese Nachteile nicht hat.

Die Aufgabe wird gelöst durch eine Klimaanlage, insbesondere für Kraftfahrzeuge, gemäß Anspruch 1, mit einem Klimakompressor, mit einem Gaskühler, mit einem Receiver und ggf. weiteren Elementen, mit einer Berstscheibe, welche bei Überschreiten eines bestimmten Druckes durch Bersten das Kältemittel an die Umgebung abgibt und dadurch das Überschreiten eines kritischen Druckes verhindert, welche sich dadurch auszeichnet, daß auf der Atmosphärenseite der Berstscheibe ein Heizdraht angebracht ist, welcher das Durchbrennen einer Berstscheiben-Metallfolie ermöglicht. Bevorzugt wird eine Klimaanlage, bei welcher das elektrisches Signal zum Durchbrennen der Berstscheibe durch eine elektronische Regeleinrichtung erzeugt wird.

Eine erfindungsgemäße Klimaanlage zeichnet sich dadurch aus, daß das Eingangssignal für die elektronische Regeleinrichtung generiert wird mittels eines Gassensors, welcher eine mögliche Leckage im Innenraum sensiert und / oder mittels eines Drucksensors, welcher bei Druckabfall das entsprechende Signal generiert und / oder mittels einer Füllmengenüberwachung, welche bei Unterschreiten eines kritischen Füllmengenstandes das Signal generiert, und / oder durch das Signal einer Airbagauslösung, z. B. bei Unfällen.

Bevorzugt wird auch eine Klimaanlage, bei welcher die Berstscheibe am Klimakompressor angebracht ist und dadurch auch die Funktion einer Druckbegrenzung am Klimakompressor erzielt wird.

Die Erfindung wird nun anhand der Figuren beschrieben.
- Figur 1: zeigt eine erfindungsgemäße Berstscheibeneinrichtung.
- Figur 2: zeigt die Sicherheitsregeleinrichtung.

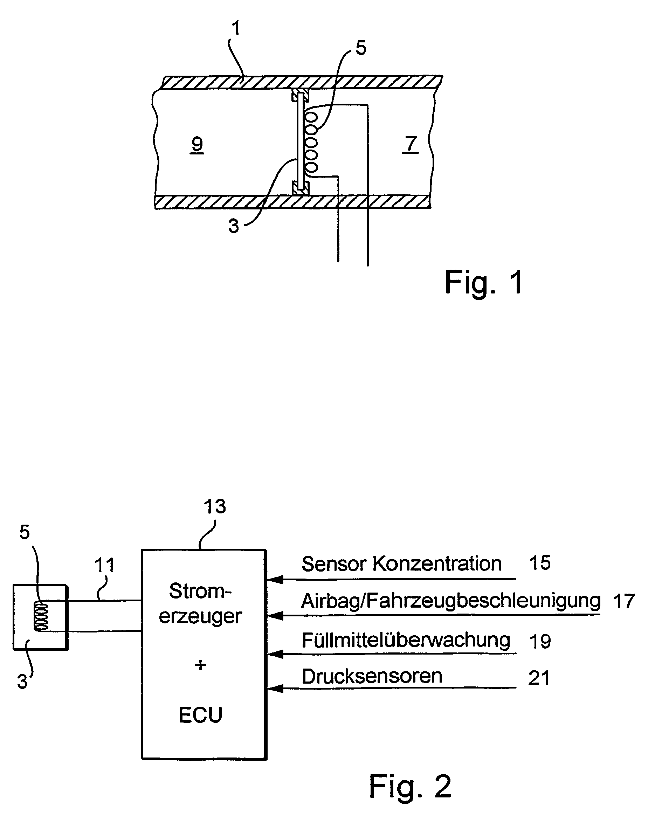

Figur 1 zeigt im Querschnitt eine erfindungsgemäße Berstscheibeneinrichtung. In einem Leitungsabschnitt 1 der Klimaanlage ist eine Berstscheibe 3 angebracht, welche z. B. aus einer für Berstscheiben üblichen Metallfolie besteht, welche bei Überschreiten eines kritischen Drucks in dem Bereich 9 der Klimaanlage zerbirst und dabei das Kältemittel in den Bereich 7 der Atmosphäre abströmen läßt. Erfindungsgemäß ist die Berstscheibe 3 auf der Atmosphärenseite 7 mit einer Heizdrahteinrichtung 5 versehen, welche bei elektrischer Bestromung die Berstscheibe erhitzt und dadurch zum Durchbrennen bringt. Damit ist also durch ein elektrisches Signal ebenfalls das Zerbersten der Berstscheibe und damit das Abströmen des Kältemittels aus dem Anlagenbereich 9 in den Atmosphärenbereich 7 möglich.

In Figur 2 wird die entsprechende Regeleinrichtung dargestellt, welche das Signal zur Bestromung des Heizdrahtes erzeugt. Die Berstscheibe 3, welche mit dem Heizdraht 5 versehen ist, ist über elektrische Leitungen 11 mit der elektrischen Regeleinrichtung 13 verbunden, welche im entsprechenden Betätigungsfall den Strom für die Heizdrahtbestromung erzeugt. Die elektronische Regeleinrichtung wertet verschiedene Signale aus, um das ferngesteuerte elektrische Bersten der Berstscheibe zu erzeugen. Ein mögliches Signal ist ein Sensorsignal eines Sensors im Fahrzeuginnenraum, welcher die entsprechende Kältemittelkonzentration im Fahrzeuginnenraum überwacht und bei Überschreiten einer kritischen Konzentration ein Signal 15 zur Regeleinrichtung schickt. Eine weitere Möglichkeit ist die Auswertung eines Signals 17 aus der Airbagauslösung des Fahrzeuges, so daß bei Unfällen auf jeden Fall die Berstscheibeneinrichtung zerstört wird und dadurch das Kältemittel in die Atmosphäre austritt und nicht in den Innenraum des verunfallten Fahrzeuges eindringen kann. Ein weiteres Signal 19 kann durch eine Füllmittelüberwachung erzeugt werden, welche den Füllmittelstand in der Klimaanlage überwacht und bei Unterschreiten eines kritischen Wertes das entsprechende Signal in die elektronische Regeleinrichtung sendet. Möglich ist ebenso ein Signal 21, welches von Drucksensoren ausgeht, die den Druck in der Klimaanlage überwachen und bei einem kritischen Druckabfall ein entsprechendes Signal an die elektronische Regeleinrichtung abgeben.

Die Erfindung basiert also darauf, daß im Fall einer Leckage der Klimaanlage eine elektrisch ansteuerbare Berstscheibe die Anlage gezielt in die Umgebung leert. Dadurch wird die Menge des in den Innenraum einströmenden Kältemittels reduziert und eine gesundheitsschädigende Wirkung vermieden.

Der erste Teil der Erfindung betrifft das elektrisch betätigbare Auslöseelement. Es handelt sich hierbei um eine handelsübliche Berstscheibe, die mittels Metallfolientechnik hergestellt wird. Bei Erreichen eines definierten Druckes zerbirst diese Folie, und das Kältemittel kann entweichen. Auf eine solche Berstscheibe wird eine Heizdraht auf der Atmosphärenseite der Metallfolie angebracht. Damit kann über eine Ansteuerung mit elektrischer Energie die Metallfolie gezielt durchgebrannt werden.

Der zweite Teil der Erfindung betrifft das dazugehörige Sicherheitskonzept und den Ansteueralgorithmus.

Die Berstscheibe kann grundsätzlich an jedem Bauteil angebracht werden, so z. B. am Gaskühler oder am Receiver oder am Kompressor. Sinnvoll ist vor allem eine Anbringung am Kompressor, da die Berstscheibe dann noch die Funktion der Druckbegrenzung mitübernehmen kann. Die bisher hierfür eingesetzte mechanische Berstscheibe entfällt. Die Erfindung ermöglicht neben dem Sicherheitsaspekt damit auch die Schaffung eines sogenannten Low-Cost-CO₂ -Systems ohne andere, aufwendigere Maßnahmen.

## Patentansprüche

1. Klimaanlage, insbesondere für Kraftfahrzeuge, mit einem Klimakompressor, mit einem Gaskühler und mit einem Receiver, mit einer Berstscheibe 3, welche bei Überschreiten eines bestimmten Druckes durch Bersten das Kältemittel an die Umgebung abgibt und somit eine kritische Drucküberschreitung vermeidet, **dadurch gekennzeichnet, daß** ein Heizdraht 5 auf der Atmosphärenseite 7 der Berstscheibe 3 angeordnet ist, welcher die Metallfolie der Berstscheibe 3 zum Durchbrennen bringt, wenn er durch ein elektrisches Signal ferngesteuert aktiviert wird.

2. Klimaanlage nach Anspruch 1, **dadurch gekennzeichnet, daß** das elektrische Signal durch eine elektronische Regeleinrichtung erzeugt wird.

3. Klimaanlage nach Anspruch 2, **dadurch gekennzeichnet, daß** das Eingangssignal für die elektronische Regeleinrichtung von einem Gassensor erzeugt wird, der eine Leckage im Innenraum des Kraftfahrzeuges sensiert, und / oder durch einen Drucksensor, welcher Druckabfälle sensiert und / oder durch eine Füllmengenüberwachung, welche ein Abfallen der Füllmengen registriert und / oder durch eine Airbagauslösung, z. B. bei Unfällen.

4. Klimaanlage nach einem der vorhergehenden Ansprüche, **dadurch gekennzeichnet, daß** die Berstscheibe 3 am Klimakompressor angeordnet ist und dabei auch die Funktion einer Druckbegrenzung am Klimakompressor erzielt wird.

## Claims

1. An air-conditioning system, in particular for motor vehicles, with an air conditioning compressor with a gas condenser and a receiver, with a rupture disk 3 that releases the coolant into the environment by rupturing when a certain pressure is exceeded and thus prevents a critical pressure over-run, **characterized in that** a heating wire 5 is placed on the atmosphere side 7 of the rupture disk 3, which causes the metal foil of the rupture disk 3 to burn through when it is activated by remote control by an electrical signal.

2. The air conditioning system according to Claim 1, **characterized in that** the electrical signal is produced by an electronic regulating device.

3. The air conditioning system according to Claim 2, **characterized in that** the input signal for the electronic regulating device is produced by a gas sensor that senses a leakage in the interior of the motor vehicle, and/or by a pressure sensor which senses drops in pressure and/or by a fill level monitoring system which registers a drop in the fill levels and/or by an airbag release system, for example in accidents.

4. The air conditioning system according to one of the preceding claims, **characterized in that** the rupture disk 3 is positioned on the air conditioning compressor, and that the function of limiting pressure at the air conditioning compressor is also achieved thereby.

## Revendications

1. Système de climatisation, en particulier pour des véhicules automobiles, comprenant un compresseur de climatisation, un refroidisseur de gaz et un récepteur, comprenant un disque de rupture 3 qui, en cas de dépassement de la limite supérieure d'une pression déterminée, évacue, par éclatement, le fluide frigorigène dans le milieu environnant et, de ce fait, évite un dépassement critique de la limite supérieure de la pression,
**caractérisé en ce qu'**un filament chauffant 5 est disposé sur le côté 7 du disque de rupture 3, tourné vers l'atmosphère, filament chauffant qui provoque la fusion de la feuille métallique du disque de rupture 3 lorsque le filament chauffant est activé et commandé à distance par un signal électrique.

2. Système de climatisation selon la revendication 1, **caractérisé en ce que** le signal électrique est produit par un dispositif de régulation électronique.

3. Système de climatisation selon la revendication 2, **caractérisé en ce que** le signal d'entrée pour le dispositif de régulation électronique est produit par un capteur de gaz qui détecte une fuite dans l'habitacle du véhicule automobile et / ou par un capteur de pression qui détecte des chutes de pression et / ou par un contrôle de la quantité de remplissage qui enregistre une chute des quantités de remplissage et / ou par un déclenchement des coussins gonflables, par exemple en cas d'accident.

4. Système de climatisation selon l'une quelconque des revendications précédentes, **caractérisé en ce que** le disque de rupture 3 est disposé sur le compresseur de climatisation et, sur le compresseur de climatisation, on obtient également la fonction d'une limitation de pression.
